# EUROPEAN PATENT SPECIFICATION

(11) **EP 2 129 732 B1**
(45) Date of publication and mention of the grant of the patent: **22.05.2013**
(21) Application number: 08735804.0
(22) Date of filing: 03.04.2008
(51) Int. Cl.: C09D 11/02

(54) **LOW YELLOWING OVERPRINT VARNISHES**
ÜBERDRUCKLACKE MIT NIEDRIGER VERGILBUNG
VERNIS DE SURIMPRESSION À FAIBLE JAUNISSEMENT

(30) Priority: 04.04.2007 US 921725 P
(43) Date of publication of application: 09.12.2009
(73) Proprietor: Sun Chemical Corporation, Parsippany, NJ 07054-1285 (US)
(72) Inventor: JOHNKE, Christian, 60316 Frankfurt Am Main (DE); PULINA, Tillmann, 61130 Niderrau-Heldenbergen (DE)
(74) Representative: Hrovat, Andrea Darinka
(86) International application number: PCT/EP2008/054063
(87) International publication number: WO 2008/122593

(56) References cited:
- US-A- 2 497 689
- US-A1- 2004 044 124
- US-A1- 2004 210 029

## Description

The present invention relates to new and advantageous low or even non-yellowing overprint varnishes, in particular oil based overprint varnishes. They are for example useful in conjunction with sheetfed offset printing inks and respective printing processes.

A great deal of printed material undergoes some form of print finishing to render it suitable for its intended use. Finishing operations may also involve more complex operations including the use of overprint varnishes (OPVs). One should bear in mind that each type of finishing operation will place demands, to a greater or lesser extent, on the previously printed ink, and the ink formulator should be aware of the demands adapted to a particular system. Thus, overprint varnishes need to be adapted for a particular use taking into consideration the printing ink and respective printing process.

Sheet-fed offset lithography is the dominant printing process for the printing of folding cartons for many purposes, including for use as food packaging. However, where an ink and/or varnish and/or overprint varnish is to be used on food packaging, it was hitherto essential, from the point of view of customer's acceptance, that it should not contaminate the food or impact any unnatural odour to it. Moreover, there is an increasing tendency for legislation to prescribe very low levels of contaminants in foods and other matter, which could affect public health. Contamination, in this context, can result from migration of public health affecting components of an ink or varnish or OPV into the food stuff or other packaged material. Undesirable odours may be imparted to the packaged material by the ink or varnish or OPV used on the packaging. Also, an overprint varnish, if applied to a printed material, must fulfil desired standards, such as rub resistance, desired gloss and should not cause undesired odours.

Generally speaking, overprint varnishes are quick drying varnishes which may, for example, provide a glossy finish over printed areas. They are also available as semi-matte and matte varnishes. There are different types of overprint varnishes used depending on the requirements for the coating and depending on the transfer technology used and of course depending on the particular finishing to be achieved.

Overprint varnishes include oil-based varnishes drying inter alia by oxidation.

With oil-based OPVs, also known as "press varnishes", one may, as mentioned above, distinguish varnishes suitable to increase the printing ink brilliance (glossy varnishes), varnishes achieving specific matte effects (matte varnishes and satin-finish varnishes) and protective varnishes which may improve resistance properties (rub resistance, chemical resistance, etc.).

The main components within oil-based OPVs are resins, drying oils, mineral oils and drying agents. Oil-based OPVs dry by absorption and oxidation (oxidative drying).

Oil-based OPVs may be based on an oleo-resinous system. Such varnishes may be run in-line or off-line and may be applied by wet offset from a normal litho plate and therefore may be applied to specific parts of the printed sheets. Alternatively, they may be applied by dry offset, i.e. with the damping unit being inoperative, to provide full coverage of the sheet. They are used to enhance resistance properties of prints as well as to give gloss, if desired, or may alternatively provide a matte or semi-matte finish to give a distinctive appearance to a product. As mentioned before, in particular printed material being the result of a sheet-fed offset printing process, like for example food packaging material, has specific needs, such as low odorous properties.

Oil-based OPVs dry by the same mechanism as conventional ink, namely by setting and oxidation. Because they are based on drying oils, they yellow on ageing, which is an undesired effect, in particular for high quality printed material which should be presentable for longer periods of time. Still further the OPVs dry with a typical oil based odour and may hence not be suited for important applications, such as for example for food packaging.

Standard formulations for oil-based resins are, for example, described in "Printing Ink for Lithography" by David J. Owen, 1990, pages 147 to 149. They all include phenolic rosin resins, such as for example Pentalyn 802 A®, which leads to yellowing. Hydrocarbon resins according to the prior art usually provided from petrochemical sources and they may comprise 5 or 9 carbon atoms and usually have a Gardner color higher than 3 and up to 14.

Yellowing might also appear due to the use of considerable amounts of vegetable oils being present in conventional oil-based varnishes. Such oils comprise conjugated double-bonds leading upon oxidation to yellowish reaction products.

The known oil-based overprint varnishes still further comprise combinations of cobalt/manganese and also cobalt / zirkonium (like, for example, Cozirc® provided by Borchers). Cobalt and manganese salts of organic acids as further drying agents, however, are colorful (blue/violet) or even brownish (manganese salts) resulting in a strong yellow color of the final overprint layer.

Summarized, disadvantages of oil-based OPVs known today are that all of them are prone to undesirable yellowing which results in unattractive or unpresentable printed material.

Nevertheless, due to the lack of a low yellowing alternative, oil-based yellowing overprint varnishes are still used for producing high quality brochures, packaging products or other printed materials printed by a sheetfed offset printing process, and until the present invention, the problem of yellowing had not been solved. The same applies to low odorous properties.

Therefore, a strong need exists for providing overprint varnishes, in particular oil-based OPVs, with low or non-yellowing properties also having good rub resistance and printability characteristics, which overprint varnishes are preferably also low odorous.

The problems noted above are overcome by the present invention providing low yellowing or preferably even non-yellowing overprint varnishes described in the patent claims and as set out herein.

According to the present invention overprint varnishes, in particular oil-based OPVs, are provided comprising a hydrogenated hydrocarbon resin with a Gardner color of less than 3, preferably less than 2, more preferred of approximately 1. Such low and desirable Gardner colors can be achieved by hydrogenation.

The hydrogenated hydrocarbon resin can be present, for example, in an amount of at least 10 % by weight, based on the ready to use overprint varnish, preferably in an amount of from 10 to 50 % by weight, based on the ready to use overprint varnish.

The low yellowing OPV according to the present invention comprising a hydrogenated hydrocarbon resin leads to low yellowing properties of the printed matter comprising the OPV. Also, the OPV according to the present invention itself is low yellowing. That means that upon storage of the OPV under conventional conditions, including a conventional time frame, the desired low Gardner color of the OPV is maintained.

The overprint varnish according to the invention may optionally further comprise a SMA resin with a Gardner color of less than 3, preferably less than 2.

The overprint varnish according to the invention may optionally still further comprise an acrylic resin.

The overprint varnish according to the invention still further comprises a phenolic free rosin resin, being preferably present in amounts of up to 30 % by weight, based on the ready to use overprint varnish.

The overprint varnish according to the invention optionally comprises a drying oil, for example selected from one ore more out of the group consisting of soy bean oil, rapeseed oil, dehydrated castor oil (DCO), derivatives of DCO or sunflower oil. The drying oil is preferably present in amounts of up to 20 % by weight, based on the ready to use overprint varnish.

The overprint varnish according to the invention may optionally still further comprise a siccative. The siccative can, for example, be present in amounts of from 1 to 2,5% by weight, based on the ready to use overprint varnish.

The present invention also refers to a method for finishing a printed material resulting from a printing process, which is preferably a sheetfed offset printing process, making use of an overprint varnish as defined herein.

The present invention also refers to a printed material comprising an overprint varnish as defined herein as well as to a use of a hydrogenated hydrocarbon resin for the preparation of an overprint varnish.

In a preferred embodiment, the novel and advantageous OPV composition according to the present invention allows for the use of exceptionally low amounts of siccatives such as for example, cobalt and/or manganese compounds, which can be present in the OPV in amounts from 0 to 0.8 % by weight. According to the present invention all amounts given in % by weight are based on the weight of the ready to use OPV composition. Discoloration, (such as yellowing) can be reduced or avoided when compared with typical amounts of such siccatives used according to the prior art.

In a preferred embodiment, yellowing is greatly reduced or eliminated in the OPV's of the present invention due to the use of hydrogenated hydrocarbon resins with significantly reduced or even no conjugated double bonds. Such conjugated double bonds are present in the resins used according to the prior art and lead to undesirable yellowing.

Lower yellowing resins used within the OPV according to the present invention are hydrogenated hydrocarbon resins with Gardner color of less than 3, preferably less than 2, most preferred close to 1. Herein "a Gardner color of a particular value" for a defined substance means that the respective substance has been subject to a Gardner color testing as set out below.

The Gardner color is determined by optionally dissolving the resin (or other sample) in appropriate solvents. The Gardner color is determined by using standard testing equipment according to DIN ISO 4630.

The hydrogenated hydrocarbon resins are preferably used in the OPV according to the invention in amounts of at least 10 % by weight, preferably between 10 to 50% by weight, based on the ready to use OPV.

Also suited within the OPVs according to the invention are fully hydrogenated hydrocarbon resins with a Gardner color of less than 3 and preferably less than 2, most preferred close to 1 or even below 1, measured according to the above mentioned DIN ISO standard.

The skilled person is well in a position to determine the most suited degree of hydrogenation of the hydrogenated hydrocarbon resin. As mentioned before, conjugated double-bonds are to be avoided. Whereas as less as possible double-bonds are on the one hand desirable in terms of low yellowing properties, on the other hand double-bonds within the hydrogenated hydrocarbon resin lead to better drying properties.

As to the choice of hydrogenated hydrocarbon resin according to the invention the skilled person is a well in the position to start with commercially available hydrogenated hydrocarbon resins as described herein. Usually the Gardner color is indicated on the publicly available data sheets referring to the respective resins. Such data sheets also indicate further suited properties of the respective hydrogenated hydrocarbon resin. In case a resin mentioned herein is not commercially available any more, the skilled person is able to trace the respective data sheet for the resin defined by a brand, and to chose an alternatively suited one based on the data sheet information.

Furthermore, the hydrogenated hydrocarbon resin according to the invention should be soluble in a mineral oil and/or a fatty acid ester, such as for example a mineral oil with a boiling point range of from 260 °C to 290 °C, TKWF 6/9® from Dow Chemical. Examples for fatty acid esters are Estisol 312® (ethyl hexyl laurate) provided Estichem in case oil based OPVs are to be produced. Preferred hydrogenated hydrocarbon resins according to the invention include, but are not limited to, polypropylene based resins, styrene, such as α-methyl styrene based resins, cyclo aliphatic or cyclo aromatic types of resins.

Some examples are the following resins:
Arkon® P 125, Arkon® P140 Arkon® P 110 provided by Arakawa;
   Kristalex® 5140; Plastolyn® 290 Plastolyn® 240; Endex® 155, Estotac® 142;
   Regalite® S 7125 provided by provided by Eastman;
Escorez® 5340 Escorez® 5320 provided by Exxon;
Norsolene® W100, Norsolene® W100, Norsolene® S145 provided by Cray Valley.

Other suitable resins are styrene maleic anhydride copolymers (SMA) or mineral oil soluble acrylics, optionally used in addition to the hydrogenated hydrocarbon resin described above. Suited compounds are, for example, polymethyl methacrylates or maleic modified rosin esters.

Some examples are:
Acrylic Degalan® PQ611 provided by Röhm;
SMA Resin Sylvaprint SA140.

According to preferred embodiments of the present invention, up to 30% by weight, based on the ready to use OPV, of phenolic free rosin resins may optionally be used for providing faster setting, higher viscosity and lower tack. These resins should preferably also have a low Gardner color which is at least lower than 10, being well below the Gardner color for rosin resins used according to the prior art. Suited resins are, for example, modified rosin esters, such as polyol modified rosin esters or maleic modified rosin esters.

Examples for such phenolic free rosin resins are:
Tertac® 170, Tertac® 160, Pinerez® 2240 provided by Cray Valley ;
Eco-Rez® 3409 and Eco-Rez® 3401 provided by Hexion;
Jonrez® IM820 Jonrez® IM 817 provided by Westvaco;
Erkamar® 8170, 8020, 8130, 8190 provided by Krämer.

Low yellowing drying oils used within the OPVs according to the present invention preferably include a combination of soy bean oil and rapeseed oil. They may be combined with low amounts of tung oil, however, if tung oil is used as a drying agent, the amount is preferably lower (preferably a maximum of 10% based on the ready to use OPV) than typically used amounts of tung oil. The same applies to linseed oil.

According to preferred embodiments, the use of tung oil as drying oil is to be avoided; the same applies to linseed oil.

Another example of a low yellowing drying oil that is suitable for use in the present invention is dehydrated castor oil (DCO, Alberding & Boley) and derivatives of the same, for example DCO-Alkydresin, providing good rub resistance.

Preferably, the drying oils are used within the OPV according to the invention in amounts between 0 to 20%. According to a preferred embodiment 0 to 24 % by weight of DCO and 0 to 24 % by weight of DCO-Alkydresin are used, wherein the sum of both components amounts to 16 to 24 % by weight.

Examples of other drying oils suitable for the present invention alkyd resin based on soy bean oil, like Setalin® V402 provided by Akzo, Fineplus® AL7300 or DCO Trionol® 1919 provided by Hexion. Preferably, they may be used in amounts between 0 to 20% by weight.

Examples of other drying components suitable for the present invention, are alkyd resin based on soy bean oil, like for example like Setalin® V402 provided by Hexion, Fineplus® AL7300 ex DIC or dehydrated castor oil (DCO) based Trionol® 1919 provided by Hexion. Also sunflower oil alkyd resins are suitable, like Setalin V407® ex Hexion. Preferably, they may be used in amounts between 0 to 20% by weight.

Within the OPVs according to the present invention effective drying agents are also used, with cerium (Cerium 10 provided by OMG) being a preferred compound. It is used as a colorless secondary drier in amounts of, for example, from 0.1 to 0.25 % by weight (based on the metal cerium). In terms of the solution of drying agent used, 1 to 2.5 % by weight of solution are used. In the solution 10 % by weight of cerium metal are present. Small amounts of cobalt and/or manganese driers can be combined with the cerium.

### Example 1:

The following overprint varnishes are provided:

| Name of Material | Low yellowing varnish* | | |
|---|---|---|---|
| | | Matte OPV | Gloss OPV |
| TALKUM FINNTALK M 05 | ---- | 3.00 | ---- |
| SYLOID 244 | ---- | 9.00 | ---- |
| COVERING WHITE | ---- | 0.50 | ---- |
| ARKON P 125 | 18.00 | ---- | ---- |
| TERTAC 170 | 26.00 | ---- | ---- |
| SETALIN V 402 | ---- | 8.00 | ---- |
| TRIONOL 1919 | 12.00 | ---- | ---- |
| Co Drier | ---- | 0.30 | 0.30 |
| Low yellowing varnish** | ---- | 68.60 | 89.40 |
| POLYGLYKOL B 01/240 | ---- | 1.00 | ---- |
| MINERALOIL PKWF 6/9 AP 74 | ---- | ---- | 6.90 |
| Tung oil | 6.00 | ---- | ---- |
| Dehydrated castor oil (DCO) STANDOiL DRO 8 P | 10.00 | ---- | ---- |
| RADIA 7192 | 14.00 | ---- | ---- |
| RADIA 7528 | 12.50 | 4.50 | ---- |
| AC POLYAETHYLEN 6 | 1.50 | ---- | ---- |
| DEUREX ME 1515 | ---- | 1.00 | ---- |
| SHAMROCK PTFE SST 3 | ---- | 0.50 | ---- |
| Waxpaste CC 6629 | ---- | 2.50 | 2.30 |
| ASCININ ANTI SKIN VP 0240 | ---- | 0.10 | 0.10 |
| CERIUM 10 | ---- | 1.00 | 1.00 |
| | 100.00 | 100.00 | 100.00 |

| | | | |
|---|---|---|---|
| *The Low yellowing varnish is the "pre-product" (herein referred to as base varnish) used for producing the ready to use OPV according to the invention. For producing the low yellowing varnish, the oils are heated to 180 °C and then the melt resins are added. After cooling, a varnish (pre-product) is obtained. This varnish is used for preparing the OPVs according to the invention by adding suitable waxes, driers and other compounds, such as matting agents (for example Syloid), depending on the desired character and appearance of the ready to use OPV. | | | |

## Claims

1. An overprint varnish comprising a hydrogenated hydrocarbon resin and a phenolic free rosin resin.

2. The overprint varnish according to claim 1 wherein the hydrogenated hydrocarbon resin has a Gardner color of less than 3.

3. The overprint varnish according to claim 1 being capable of maintaining a Gardner color of less than 3 when stored under conventional storage conditions.

4. The overprint varnish according to one or more of the preceding claims which is an oil based overprint varnish.

5. The overprint varnish according to one or more of the preceding claims further comprising an acrylic resin.

6. The overprint varnish according to claim 1, wherein the phenolic free rosin resin is present in amounts of up to 30 % by weight, based on the ready to use overprint varnish.

7. The overprint varnish according to one or more of the preceding claims further comprising a drying oil.

8. The overprint varnish according to claim 7, wherein the drying oil is selected from one or more out of the group consisting of soy bean oil, rapeseed oil, dehydrated castor oil (DCO), derivatives of DCO or sunflower oil.

9. The overprint varnish according to claim 8, wherein the derivative of DCO is DCO-alkydresin.

10. The overprint varnish according to claim 8 wherein the drying oil is present in amounts of up to 20 % by weight, based on the ready to use overprint varnish.

11. The overprint varnish according to claim 7, wherein the drying oil is selected from alkyd resin based on soy bean oil, sunflower oil alkyd resin and mixtures thereof.

12. The overprint varnish according to one or more of the preceding claims further comprising a siccative.

13. The overprint varnish according to claim 12, wherein the siccative is present in amounts of from 1 to 2,5 % by weight, based on the ready to use overprint varnish.

14. The overprint varnish according to one or more of the preceding claims wherein the hydrogenated hydrocarbon resin is present in an amount of at least 10 % by weight, based on the ready to use overprint varnish.

15. The overprint varnish according to claim 14 wherein the hydrogenated hydrocarbon resin is present in an amount of from 10 to 50 % by weight, based on the ready to use overprint varnish.

16. A method for finishing a printed material resulting from a printing process making use of an overprint varnish as defined in one or more of the preceding claims.

17. The method according to claim 16 wherein the printing process is a sheetfed offset printing process.

18. A printed material comprising an overprint varnish as defined in one or more of the preceding claims.

19. Use of a hydrogenated hydrocarbon resin in combination with a phenolic free rosin resin for the preparation of an overprint varnish.

## Patentansprüche

1. Überdruckfirnis, umfassend ein hydriertes Kohlenwasserstoffharz und ein Phenol-freies Kolophoniumharz.

2. Überdruckfirnis gemäß Anspruch 1, wobei das hydrierte Kohlenwasserstoffharz eine Gardner-Farbzahl von niedriger als 3 aufweist.

3. Überdruckfirnis gemäß Anspruch 1, welcher zum Aufrechterhalten einer Gardner-Farbzahl von niedriger als 3 in der Lage ist, wenn unter herkömmlichen Lagerbedingungen gelagert wird.

4. Überdruckfirnis gemäß einem oder mehreren der vorhergehenden Ansprüche, welcher ein Überdruckfirnis auf Öl-Basis ist.

5. Überdruckfirnis gemäß einem oder mehreren der vorhergehenden Ansprüche, ferner umfassend ein Acrylharz.

6. Überdruckfirnis gemäß Anspruch 1, wobei das Phenol-freie Kolophoniumharz in Mengen von bis zu 30 Gew.%, bezogen auf den verwendungsbereiten Überdruckfirnis, vorhanden ist.

7. Überdruckfirnis gemäß einem oder mehreren der vorhergehenden Ansprüche, ferner umfassend ein trocknendes Öl.

8. Überdruckfirnis gemäß Anspruch 7, wobei das trocknende Öl aus einem oder mehreren aus der Gruppe, bestehend aus Sojabohnenöl, Rapsöl, dehydratisiertem Rizinusöl (DCO), Derivaten von DCO oder Sonnenblumenöl, ausgewählt ist.

9. Überdruckfirnis gemäß Anspruch 8, wobei das Derivat von DCO DCO-Alkydharz ist.

10. Überdruckfirnis gemäß Anspruch 8, wobei das trocknende Öl in Mengen von bis zu 20 Gew.-%, bezogen auf den verwendungsbereiten Überdruckfirnis, vorhanden ist.

11. Überdruckfirnis gemäß Anspruch 7, wobei das trocknende Öl aus Alkydharz basierend auf Sojabohnenöl, Sonnenblumenöl-Alkydharz und Gemischen davon ausgewählt ist.

12. Überdruckfirnis gemäß einem oder mehreren der vorhergehenden Ansprüche, ferner umfassend ein Trocknungsmittel.

13. Überdruckfirnis gemäß Anspruch 12, wobei das Trocknungsmittel in Mengen von 1 bis 2,5 Gew.-%, bezogen auf den verwendungsbereiten Überdruckfirnis, vorhanden ist.

14. Überdruckfirnis gemäß einem oder mehreren der vorhergehenden Ansprüche, wobei das hydrierte Kohlenwasserstoffharz in einer Menge von mindestens 10 Gew.-%, bezogen auf den verwendungsbereiten Überdruckfirnis, vorhanden ist.

15. Überdruckfirnis gemäß Anspruch 14, wobei das hydrierte Kohlenwasserstoffharz in einer Menge von 10 bis 50 Gew.-%, bezogen auf den verwendungsbereiten Überdruckfirnis, vorhanden ist.

16. Verfahren zum Fertigstellen eines bedruckten Materials, resultierend von einem Druckverfahren, unter Verwendung eines Überdruckfirnis wie in einem oder mehreren der vorhergehenden Ansprüche definiert.

17. Verfahren gemäß Anspruch 16, wobei das Druckverfahren ein Bogenoffsetdruckverfahren ist.

18. Bedrucktes Material, umfassend einen Überdruckfirnis wie in einem oder mehreren der vorhergehenden Ansprüche definiert.

19. Verwendung eines hydrierten Kohlenwasserstoffharzes in Kombination mit einem Phenol-freien Kolophoniumharz zur Herstellung eines Überdruckfirnisses.

## Revendications

1. Vernis de surimpression comprenant une résine hydrocarbonée hydrogénée et une résine de colophane sans composé phénolique.

2. Vernis de surimpression selon la revendication 1, dans lequel la résine hydrocarbonée hydrogénée possède une couleur Gardner inférieure à 3.

3. Vernis de surimpression selon la revendication 1 qui est capable de conserver une couleur Gardner inférieure à 3 lorsqu'il est stocké dans des conditions de stockage classiques.

4. Vernis de surimpression selon une ou plusieurs des revendications précédentes, qui est un vernis de surimpression à base d'huile.

5. Vernis de surimpression selon une ou plusieurs des revendications précédentes, comprenant en outre une résine acrylique.

6. Vernis de surimpression selon la revendication 1, dans lequel la résine de colophane sans composé phénolique est présente en des quantités allant jusqu'à 30 % en poids, en se basant sur le vernis de surimpression prêt à l'emploi.

7. Vernis de surimpression selon une ou plusieurs des revendications précédentes, comprenant en outre une huile siccative.

8. Vernis de surimpression selon la revendication 7, dans lequel l'huile siccative est choisie parmi une ou plusieurs huiles du groupe constitué par l'huile de soja, l'huile de colza, l'huile de ricin déshydratée (HRD), des dérivés de l'huile de ricin déshydratée ou l'huile de tournesol.

9. Vernis de surimpression selon la revendication 8, dans lequel le dérivé de l'huile de ricin déshydratée est une résine alkyde-huile de ricin déshydratée.

10. Vernis de surimpression selon la revendication 8, dans lequel l'huile siccative est présente en des quantités allant jusqu'à 20 % en poids, en se basant sur le vernis de surimpression prêt à l'emploi.

11. Vernis de surimpression selon la revendication 7, dans lequel l'huile siccative est choisie parmi une résine alkyde à base d'huile de soja, une résine alkyde à base d'huile de tournesol et des mélanges de celles-ci.

12. Vernis de surimpression selon une ou plusieurs des revendications précédentes, comprenant en outre un siccatif.

13. Vernis de surimpression selon la revendication 12, dans lequel le siccatif est présent en des quantités de 1 à 2,5 % en poids, en se basant sur le vernis de surimpression prêt à l'emploi.

14. Vernis de surimpression selon une ou plusieurs des revendications précédentes, dans lequel la résine hydrocarbonée hydrogénée est présente en une quantité d'au moins 10 % en poids, en se basant sur le vernis de surimpression prêt à l'emploi.

15. Vernis de surimpression selon la revendication 14, dans lequel la résine hydrocarbonée hydrogénée est présente en une quantité de 10 % à 50 % en poids, en se basant sur le vernis de surimpression prêt à l'emploi.

16. Procédé de finition d'un matériau imprimé résultant d'un procédé d'impression utilisant un vernis de surimpression tel que défini dans une ou plusieurs des revendications précédentes.

17. Procédé selon la revendication 16, dans lequel le procédé d'impression est un procédé d'impression offset à feuilles.

18. Matériau imprimé comprenant un vernis de surimpression tel que défini dans une ou plusieurs des revendications précédentes.

19. Utilisation d'une résine hydrocarbonée hydrogénée en combinaison avec une résine de colophane sans composé phénolique pour la préparation d'un vernis de surimpression.
